# EUROPÄISCHE PATENTANMELDUNG

(11) **EP 1 628 024 A2**
(43) Veröffentlichungstag der Anmeldung: **22.02.2006**
(21) Anmeldenummer: 05016037.3
(22) Anmeldetag: 23.07.2005
(51) Int. Cl.: F16C 33/10, F16C 33/66, F16N 11/00, B65G 39/09, F16C 21/00

(54) **Langzeit-Schmiersystem bei einem Lager für eine Welle**

(30) Priorität: 21.08.2004 DE 102004040633
(71) Anmelder: KHS Maschinen- und Anlagenbau Aktiengesellschaft, 44143 Dortmund (DE)
(72) Erfinder: Bernhard, Herbert, 55578 Wolfsheim (DE)

(57) **Zusammenfassung**

Eine Lageranordnung (4) mit Langzeit-Schmiersystem für die Welle (5) einer Maschine zum Be- und/oder Verarbeiten von Flaschen oder dergleichen Behälter, mit einer die Welle auf wenigstens einer Teillänge umschließenden Lagerhülse (8) und mit wenigstens einem Lager (11,12) in einem zwischen der Welle und einer Innenfläche der Lagerhülse gebildeten Lagerinnenraum (13), der durch wenigstens zwei in Achsrichtung der Welle gegeneinander versetzte Dichtungen (14,15) verschlossen ist und zur Aufnahme eines Schmiermittels dient, ist gekennzeichnet durch wenigstens einen ersten Kanal (19) zum Zuführen des Schmiermittels, der an einem zwischen dem wenigstens einen Lager (11) und einer ersten Dichtung (14) gebildeten Abschnitt des Lagerinnenraums (13) mündet, sowie durch Mittel (21,22) an einem zwischen dem wenigstens einen Lager (12) und der zweiten Dichtung (15) gebildeten Abschnitt des Lagerinnenraums (13) zum Entlüften dieses Raumes.

## Beschreibung

Die Erfindung bezieht sich auf ein Langzeit-Schmiersystem gemäß Oberbegriff Patentanspruch 1.

Speziell auch bei Maschinen, welche zum Be- und/oder Verarbeiten von Flaschen oder dergleichen Behälter z.B. in der Getränkeindustrie verwendet werden, ist es erforderlich, vorhandene Lager ausreichend zu schmieren, d.h. ausreichend mit einem geeignetem Schmiermittel (Fett) zu versorgen. Nur durch eine zuverlässige Schmierung können größere Schäden oder gar Maschinenausfälle sicher vermieden werden.

Diese Versorgung kann entweder manuell, oder aber automatisch durch eine zentrale Schmieranlage erfolgen, wobei derartige Schmieranlagen durch die notwendigen Verteiler, Kontrollelemente, Schmierleitungen usw. aufwendig und teuer sind. Hinzu kommt, dass sich durch überschüssiges, austretendes Schmiermittel vielfach Verunreinigungen nicht vermeiden lassen, was in vielen Anwendungsbereichen nicht erwünscht, teilweise sogar verboten ist. Dieses Problem läßt sich zwar durch eine Fettrückführung beheben, allerdings mit dem weiteren Nachteil eines zusätzliche Kosten verursachenden konstruktiven Aufwandes.

Unter einer "Maschine zum Be- und/oder Verarbeiten von Flaschen oder dergleichen Behälter" ist im Sinne der Erfindung ganz allgemein eine Maschine zu verstehen, die z.B. in Betrieben der Nahrungs- und/oder Getränkeindustrie zum Reinigen, Füllen, Kontrollieren, Verschließen, Etikettieren von Flaschen oder anderen Behältern sowie zum Verpackung und Entleeren von Behältern verwendet wird. Derartige Maschinen sind dann insbesondere Reinigungsmaschinen, Rinser, Füller, Inspektoren, Verschließer, Packer und Entpacker usw.

Aufgabe der Erfindung ist es, ein Langzeit-Schmiersystem aufzuzeigen, welches bei einem geringen konstruktiven Aufwand ein zuverlässiges Langzeit-Schmieren des wenigstens einen Lagers der jeweiligen Lageranordnung gewährleistet.

Zur Lösung dieser Aufgabe ist ein Langzeit-Schmiersystem entsprechend dem Patentanspruch 1 ausgebildet. Weiterbildungen der Erfindung sind Gegenstand der Unteransprüche.

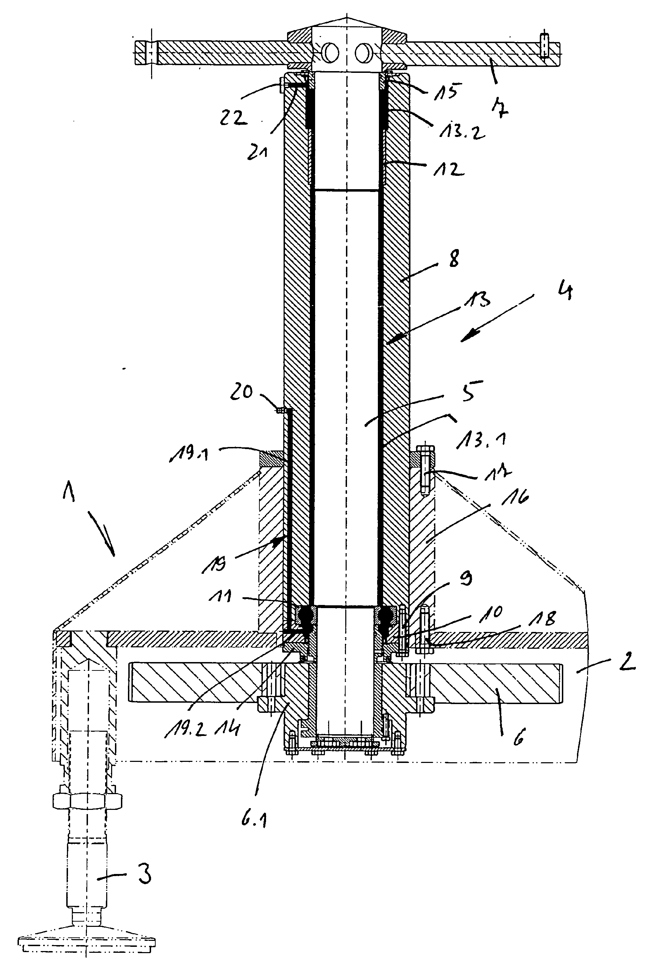

Die Erfindung wird im Folgenden anhand der Figur, die in vereinfachter Darstellung und teilweise im Schnitt ein Langzeit-Schmiersystem bzw. die Lagerung einer Welle einer Maschine zum Be- und/oder Verarbeiten von Flaschen oder dergleichen Behälter zeigt, näher erläutert.

In der Figur ist mit 1 allgemein der Maschine zum Be- und/oder Verarbeiten von Flaschen oder dergleichen Behälter bezeichnet, beispielsweise der Maschinenrahmen einer Etikettiermaschine, eines Füllers, eines Verschließers, eines Inspektors usw. An diesem Maschinenrahmen 1, von dem der einfacheren Darstellung wegen im wesentlichen nur ein horizontales, unteres Rahmenelement 2 und ein Standfuß 3 wiedergegeben sind, ist in einer Lageranordnung 4 mit Langzeit-Schmiersystem eine mit ihrer Achse in vertikaler Richtung orientierte Welle 5 drehbar gelagert. Bei der dargestellten Ausführungsform ist die Welle 5 an ihrem unteren, aus der Lageranordnung 4 vorstehenden Ende mit einem beispielsweise zum Antrieb der Welle 5 dienenden Zahnrad 6 versehen. An dem oberen, ebenfalls aus der Lageranordnung 4 vorstehenden Ende ist auf der Welle 5 ein weiteres Funktionselement befestigt, und zwar bei der dargestellten Ausführungsform eine Scheibe 7.

Die Lageranordnung 4 umfasst u.a. eine die Welle umschließende äußere Lagerhülse 8, die sich bei der dargestellten Ausführungsform über einen Großteil der Länge der Welle 5 erstreckt. Am unteren Ende der Lagerhülse 8 ist mit Hilfe von mehreren, mit ihren Achsen jeweils parallel zur Achse der Welle 5 orientierten Schrauben 9 ein Ring 10 befestigt, durch den die Welle 5 hindurchreicht. Mit dem Ring 10 ist ein unteres Lager 11 in einer entsprechenden Erweiterung des Innenraumes der Lagerhülse 8 gehalten. Das Lager 11 ist beispielsweise als Radial- und Axiallager ausgeführt und bei der dargestellten Ausführungsform von einem geeigneten Kugellager gebildet.

Im oberen Bereich der Lagerhülse 8 ist die Welle 5 in einem Lager 12 gelagert, welches ebenfalls in der Lagerhülse 8 angeordnet und bei der dargestellten Ausführungsform als Gleitlager ausgeführt ist. Der zwischen der Welle 5 und der Innenfläche der Lagerhülse gebildete Raum bzw. Ringspalt 13 ist am unteren Ende der Lageranordnung 4 bzw. der Lagerhülse 8 durch eine Dichtung 14 und am oberen Ende der Lageranordnung 4 bzw. der Lagerhülse 8 durch eine Dichtung 15 dicht verschlossen.

Zur Befestigung der Lagerhülse 8 an dem Maschinenrahmen 1 bzw. dem Rahmenelement 2 ist an der Oberseite dieses Rahmenelementes 2 eine äußere Lageraufnahme 16 vorgesehen, in die die Lagerhülse 8 mit einem Teil ihrer unteren Länge eingesetzt und in der die Lagerhülse 8 durch Verschrauben (Schrauben 17) derart verankert ist, dass sie mit einem Teil ihrer Länge über die Lageraufnahme 16 nach oben vorsteht. Die Lageraufnahme 16 ist mit Schrauben 18 am Rahmenelement 2 gehalten.

Bei der dargestellten Ausführungsform stützt sich die beispielsweise ebenfalls mit den Schrauben 9 gehaltene Dichtung 14 auch gegen die der Lageranordnung 4 zugewandte Stirnseite des Zahnrades 6 bzw. des nabenartigen Zahnradträgers 6.1 ab.

Für eine Versorgung beider Lager 11 und 12 mit nach Menge und Qualität ausreichendem Schmiermittel (z.B. Schmierfett) und für eine Langzeit-Schmierung bildet der Ringspalt 13 insbesondere mit einem Abschnitt 13.1 oberhalb des Lagers 11 sowie auch mit einem Abschnitt 13.2 oberhalb des Lagers 12 jeweils einen Vorratsraum zur Aufnahme eines Vorrats an Schmiermittel. Um für den Abschnitt 13.2 ein ausreichendes Volumen zu erreichen, weist dort die Lagerhülse 8 einen etwas vergrößerten Innendurchmesser bzw. Querschnitt auf.

Zum Zuführen des pastösen Schmiermittels in den von dem Ringspalt 13 gebildeten Vorratsraum ist ein Schmiermittelkanal 19 vorgesehen, der mit einem Abschnitt 19.1 in der Lagerhülse 8 und mit einem Abschnitt 19.2 im Ring 10 verläuft. Der Abschnitt 19.1 ist von einer Bohrung gebildet, die mit ihrer Längserstreckung parallel zur Achse der Welle 5 orientiert ist. Das untere Ende des Abschnittes 19.1 geht in den Abschnitt 19.2 über, der im Ring 10 vorgesehen ist und seinerseits in den Ringspalt 13 unterhalb des Lagers 11 mündet. Der Abschnitt 19.2 ist durch eine radiale und eine in diese mündende axiale Bohrung gebildet, wobei die radiale Bohrung an ihren außenliegenden Ende bei der dargestellten Ausführungsform durch die gegen die Außenfläche des Ringes 10 anliegende Innenfläche der Lageraufnahme 16 verschlossen ist.

Der Kanal 19 endet an seiner dem Ring 10 entfernt liegenden Ende an einem Schmiernippel 20, der sich frei zugänglich an dem aus der Lageraufnahme 16 vorstehenden Abschnitt der Lagerhülse 8 befindet.

Am oberen Ende des Ringspaltes 13 bzw. des Abschnittes 13.2 ist in der Lagerhülse 8 ein radialer Kanal 21 vorgesehen, der einerseits in den Ringspalt 13 und andererseits an der Außenfläche der Lagerhülse 8 mündet und dort durch ein bei der dargestellten Ausführungsform von einer Schraube gebildetes abnehmbares Verschlusselement 22 verschlossen ist.

Das Befüllen mit dem Schmiermittel (Schmierfett) erfolgt bei geöffnetem Kanal 21 über den Schmiernippel 20 beispielsweise mit einer geeigneten Schmiermittel- oder Fettpresse. Über den Kanal 19 wird das Schmiermittel in solcher Menge von unten her in den vom Ringspalt 13 gebildeten Vorratsraum zugeführt, bis es an dem geöffneten Kanal 21 austritt und somit der gesamte von den Kanälen 19, 20, 21 und dem Ringspalt 13 gebildete Raum vollständig mit Schmiermittel gefüllt ist. Der im Ringspalt 13 aufgenommene Schmiermittelvorrat reicht dann für ein zuverlässiges Schmieren der Lager 11 und 12 über eine lange Betriebszeit, beispielsweise über eine Betriebszeit von einem Jahr oder länger aus. In einem vorgegebenen zeitlichen Turnus wird dann der Vorrat an Schmiermittel geprüft. Eventuell fehlendes Schmiermittel über den Schmiernippel 21 bei wiederum geöffnetem Kanal 21 nachgefüllt. Das beim ersten Befüllen der Lageranordnung 4 mit Schmiermittel, aber auch beim Ergänzen des Schmiermittels am geöffneten Kanal 21 austretende Schmiermittel kann problemlos gesammelt werden.

Da die Welle 5 mit ihrer Achse in vertikaler Richtung orientiert ist, erfolgt das Befüllen des Ringraumes 13 mit dem Schmiermittel (Schmierfett) über den Kanal 19 von unten nach oben in der Weise, dass das Schmiermittel im Ringkanal 13 die Welle 5 an ihrem gesamten Umfang gleichmäßig umschließend nach oben ansteigt und hierbei die im Ringkanal 13 vorhandene Luft über den geöffneten Kanal 21 austritt. Da sich der Ringkanal 13 über einen Großteil der Welle 5 erstreckt, ist die Länge dieses Ringkanals auch um ein Vielfaches größer als der Durchmesser der Welle 5, beispielsweise um den Faktor 6 bis 8.

Die Erfindung wurde vorstehend an einem Ausführungsbeispiel beschrieben. Es versteht sich, dass zahlreiche Änderungen sowie Ergänzungen möglich sind, ohne das dadurch der der Erfindung zugrundeliegende Erfindungsgedanke verlassen wird.

### Bezugszeichenliste

- 1: Maschinenrahmen
- 2: Rahmenelement
- 3: Standfuß
- 4: Lageranordnung
- 5: Welle
- 6: Zahnrad
- 7: Scheibe
- 8: Lagerhülse
- 9: Schraube
- 10: Ring
- 11, 12: Lager
- 13: Ringspalt
- 13.1, 13.2: Abschnitt des Ringspaltes
- 14,15: Dichtung
- 16: Lageraufnahme
- 17, 18: Schraube
- 19: Schmiermittel- oder Fettkanal
- 19.1, 19.2: Abschnitt des Schmiermittel- oder Fettkanals
- 20: Schmiernippel
- 21: Kanal
- 22: Verschlusselement

## Patentansprüche

1. Langzeit-Schmiersystem bei einer Lageranordnung (4) für eine Welle (5) einer Maschine zum Be- und/oder Verarbeiten von Flaschen oder dergleichen Behälter, mit einer die Welle (5) auf wenigstens einer Teillänge umschließenden Lagerhülse (8), mit wenigstens einem Lager (11, 12) in einem zwischen der Welle (5) und einer Innenfläche der Lagerhülse (8) gebildeten Lagerinnenraum (13), der durch wenigstens zwei in Achsrichtung der Welle gegeneinander versetzte Dichtungen (14, 15) verschlossen ist und zur Aufnahme eines Schmiermittels, beispielsweise zur Aufnahme von Schmierfett für das wenigstens eine Lager (11, 12) dient, **gekennzeichnet**
**durch** wenigstens einen ersten Kanal (19) zum Zuführen des Schmiermittels, der im Bereich des wenigstens einen Lagers (11) mündet, und
**durch** Mittel (21, 22) an einem zwischen dem wenigstens einen Lager (11, 12) und einer Dichtung (15) gebildeten Abschnitt des Lagerinnenraum (13) zum Entlüften dieses Raumes.

2. Langzeit-Schmiersystem nach Anspruch 1 **dadurch gekennzeichnet, dass** der wenigstens eine erste Kanal (19) an einem zwischen dem wenigstens einen Lager (11) und einer ersten Dichtung (14) gebildeten Abschnitt des Lagerinnenraum (13) mündet.

3. Langzeit-Schmiersystem nach Anspruch 1 oder 2, **gekennzeichnet durch** wenigstens zwei in Achsrichtung der Welle (5) gegeneinander versetzte Lager (11, 12) in der Lagerhülse (8) bzw. in dem Lagerinnenraum (13).

4. Langzeit-Schmiersystem nach Anspruch 3, **dadurch gekennzeichnet, dass** der wenigstens eine erste Kanal (19) in den Lagerinnenraum (13) an einem Abschnitt zwischen der ersten Dichtung (14) und dem auf diese Dichtung in Achsrichtung der Welle folgenden Lager (11) mündet, und dass die Mittel zum Entlüften zwischen der zweiten Dichtung (15) und dem in Achsrichtung der Welle (5) auf diese Dichtung folgenden Lager (12) vorgesehen sind.

5. Langzeit-Schmiersystem nach einem der vorhergehenden Ansprüche, **dadurch gekennzeichnet, dass** die Mittel zum Entlüften von wenigstens einem verschließbaren zweiten Kanal (21) gebildet sind.

6. Langzeit-Schmiersystem nach einem der vorhergehenden Ansprüche, **dadurch gekennzeichnet, dass** die Mittel zum Entlüften auf einen Niveau vorgesehen sind, welches sich in vertikaler Richtung oberhalb desjenigen Niveaus befindet, an dem der wenigstens eine erste Kanal (19) in den Lagerinnenraum (13) mündet.

7. Langzeit-Schmiersystem nach Anspruch 6, **dadurch gekennzeichnet, dass** die Welle (5) mit ihrer Achse in vertikaler Richtung orientiert ist, und dass der erste Kanal (19) unterhalb des wenigstens einen Lagers (11) in den Lagerinnenraum (13) mündet.

8. Langzeit-Schmiersystem nach einem der vorhergehenden Ansprüche, **dadurch gekennzeichnet, dass** sich der wenigstens eine erste Kanal (19) mit einem Teilabschnitt (19.1) in der Lagerhülse (8), vorzugsweise in Richtung der Achse der Welle (5) erstreckt.

9. Langzeit-Schmiersystem nach einem der vorhergehenden Ansprüche, **gekennzeichnet durch** einen Haltering (10) zum Halten des wenigstens einen Lagers (11), wobei sich der wenigstens eine erste Kanal (19) zumindest mit einem Teilabschnitt (19.2) in diesem Ring erstreckt und an einer die Welle (5) umschließenden Ringinnenfläche in den Lagerinnenraum (13) mündet.

10. Langzeit-Schmiersystem nach einem der vorhergehenden Ansprüche, **dadurch gekennzeichnet, dass** der wenigstens eine erste Kanal (19) an der Außenfläche der Lageranordnung (4) oder der Lagerhülse (8) an einer Schmiermittel- oder Befüllöffnung (20) mündet.

11. Langzeit-Schmiersystem nach Anspruch 10, **dadurch gekennzeichnet, dass** die Schmiermittel- oder Befüllöffnung (20) von einem Schmiernippel (20) gebildet ist.

12. Langzeit-Schmiersystem nach einem der vorhergehenden Ansprüche, **dadurch gekennzeichnet, dass** am Maschinenrahmen (1) eine die Lagerhülse (8) auf einer Teillänge aufnehmende Lageraufnahme (16) vorgesehen ist, und dass die Schmiermittel- oder Befüllöffnung (20) sich an einem aus der Lageraufnahme (16) vorstehenden Abschnitt der Lagerhülse (8) befindet.

13. Langzeit-Schmiersystem nach einem der vorhergehenden Ansprüche, **dadurch gekennzeichnet, dass** sich der Lagerinnenraum (13) über einen Großteil der Länge der Welle (5) erstreckt, beispielsweise wenigstens 60% der Gesamtlänge der Welle (5).

14. Langzeit-Schmiersystem nach einem der vorhergehenden Ansprüche, **dadurch gekennzeichnet, dass** sich der Lagerinnenraum (13) in Achsrichtung der Welle (5) über eine Länge erstreckt, die um ein Vielfaches größer ist als der Durchmesser der Welle (5), beispielsweise wenigstens um den Faktor 6 bis 8 größer ist als der Durchmesser der Welle (5).

15. Langzeit-Schmiersystem nach einem der vorhergehenden Ansprüche, **dadurch gekennzeichnet, dass** der Lagerinnenraum (13) ein Ringraum ist.
